# EUROPEAN PATENT APPLICATION

(11) **EP 0 912 050 A2**
(43) Date of publication of application: **28.04.1999**
(21) Application number: 98308704.0
(22) Date of filing: 23.10.1998
(51) Int. Cl.: H04N 5/46

(54) **Method and apparatus for receiving analog broadcasting by a digital broadcasting receiver**

(30) Priority: 23.10.1997 KR 5434597
(71) Applicant: Samsung Electronics Co., Ltd., Suwon, Kyungi-do (KR)
(72) Inventor: Kim, Kyoung-su, Kwonsun-gu, Suwon, Kyonggi-do (KR); Shim, Jae-Kyoung, Paldal-gu, Suwon, Kyonggi-do (KR)
(74) Representative: Tunstall, Christopher Stephen

(57) **Abstract**

An apparatus and method for receiving analog broadcasting of a digital broadcasting receiver, of which includes: a controller, which generates more than two control signals having respectively different information, for receiving analog/digital broadcasting, according to the selection of an analog broadcasting channel or a digital broadcasting channel; an air tuner for receiving the analog broadcasting signal, by the control signal of the controller; a synchronous separation unit for extracting a synchronous signal from the analog broadcasting signal, received by the air tuner; an additional information process unit for generating additional information by the control signal of the controller; a video encoder unit, which encodes one signal by the control signal generated from the controller to the analog video signal by synchronising to the synchronous signal which is obtained by the synchronous separation unit, wherein one signal is a signal between the video signal which is obtained from the MPEG audio/video process unit, and the additional information which is obtained from the additional information process unit; a video mix unit for mixing the video signal from the air tuner and the encoded signal by the control signal of the controller and transmitting the same; a digital/analog converting unit for converting the audio signal, which is obtained from the MPEG audio/video process unit, to the analog signal; and an audio selection unit for selecting the analogized audio signal and the audio signal which is obtained by the air tuner by the control signal of the controller and transmitting the same.

## Description

### BACKGROUND OF THE INVENTION

The present invention relates to a method and apparatus for receiving analog broadcasting of a digital broadcasting receiver, and more particularly, relates to a method and apparatus for receiving analog broadcasting of a digital broadcasting receiver for selectively receiving analog broadcasting or digital broadcasting, according to selection of a user in a digital satellite broadcasting receiver or a digital cable broadcasting receiver using a digital transmission system such as a high definition television.

Nowadays, a data (information) transmission system is changed from an analog type to a digital type with technical improvement of an information media.

Then, to meet the requirement for transmitting an utmost amount of information within the same time, the data is compressed and transmitted using a data compressing rule such as an MPEG.

The ISO standardises the MPEG (Motion Pictures Experts Group) as a standardised coding system, related to a digital motion picture coding (compressing) system, an acoustic coding system and a multiplexing and separating system, for communication, broadcasting, media for storing data and computer fields.

The MPEG system compresses an audio visual such as the acoustic signal, a motion picture and a still image at a high rate and transmits the same. The advantages of using the MPEG system are hereinafter described. It is possible to obtain a multi-channelling and high-defined transmission effect in the broadcasting. An occupied amount of the media for storing data can be reduced. Multimedia information can be stored in a low-priced storing media, and multimedia communication is cheaply executed in the multimedia communication field. Accordingly, the MPEG system becomes a core technology in the recent multimedia era.

A television receiver is standardised for processing an analog broadcasting signal. For receiving a digital broadcasting signal (such as those provided by satellite broadcasting systems and another digital broadcasting systems) in an analog type television receiver, a digital broadcasting receiver, that is an additional converting apparatus called a 'Digital Set Top Box' is required, for converting the compressed and transmitted digital broadcasting signal, according to the MPEG rule, into a corresponding analog broadcasting-type signal.

The digital broadcasting receiver converts the digital-type video signal from a programme supplier and a service supplier, that is, a broadcasting station such as a satellite broadcasting station, or a cable broadcasting station such as a cable television broadcasting station, into the analog broadcasting-type video signal. That is, the digital broadcasting receiver can convert the digital broadcasting system into the analog broadcasting system required for processing the signal in the general television receiver. Recently, the digital broadcasting receivers are becoming widely spread according to the desire of the user to view the digital-type broadcasting signals.

Accordingly, as well known, after converting programmes from the analog signal into the digital signal, each broadcasting station or the cable broadcasting station supply the programmes.

To allow the transmission of a large qualtity of information, the converted data is compressed by a predetermined compressing rule and transmitted to a viewer via a communication network.

The digital broadcasting receiver (digital set top box) receives the transmitted digital data and displays the analog signal on a monitor after converting the digital data into the analog signal at the viewer's side.

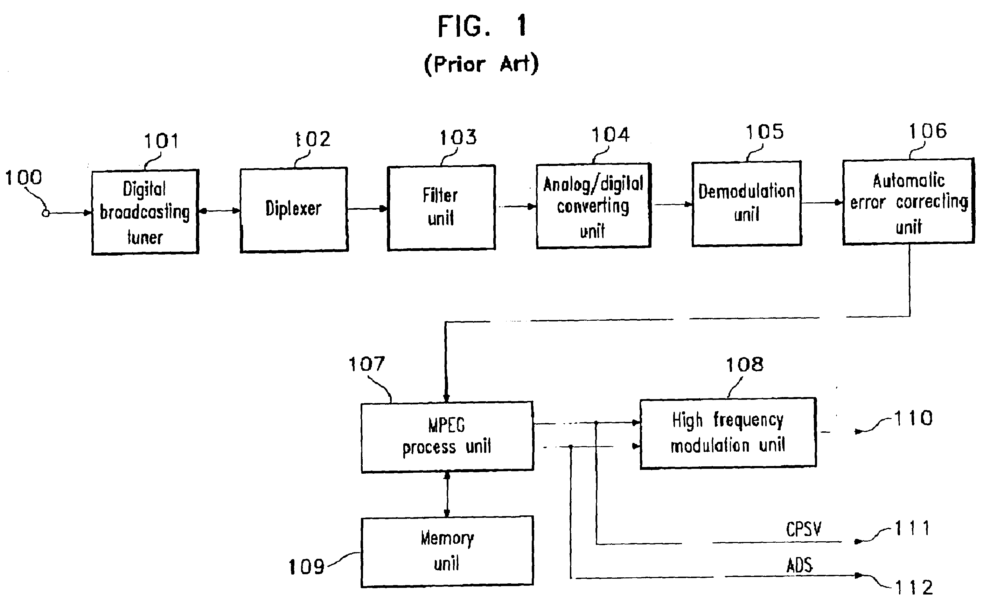

As previously mentioned, FIG. 1 is an apparatus for processing the digital signal, which is compressed and transmitted by each broadcasting station or the cable broadcasting station, to the analog signal and displaying the analog signal.

The apparatus shown in FIG. 1 will be described hereinafter as an example of a conventional digital broadcasting receiver.

As shown in FIG. 1, the digital broadcasting receiver includes: a digital broadcasting tuner 101, which tunes a compressed hybrid carrier signal, which is transmitted from each broadcasting station or the cable broadcasting station and inputted via an input terminal 100, to a frequency of a relevant channel and changes an amplitude of the tuned carrier signal in proportion to a size of a phase shift modulation signal; a diplexer 102 for eliminating a mutual interference between the video signal and the audio signal among the tuned carriers which are tuned by the digital broadcasting tuner 101; a filter unit 103 for extracting a digital signal band only by filtering the carrier signal, obtained from the diplexer 102; an analog to digital (A/D) converting unit 104 for converting the extracted analog signal into the digital signal and outputting the same; a demodulation unit 105 for restoring the digital data, obtained from the A/D converting unit 104, to an initial data; an automatic error correcting unit 106, for correcting the error generated from the interference between adjacent channels, which corrects a carrier data format, demodulated and inputted by the demodulation unit 105, based on residue information, and outputs the same by a packet unit; an MPEG process unit 107, which MPEG processes the video data and the audio data, which are inputted after correcting the error, stores the same in a memory unit 108, and additionally, converts the same to an initial composite video signal CPSV and the audio signal ADS and respectively outputs the composite video signal CPSV and the audio signal ADS to a video output terminal 111 and an audio output terminal 112; and a high frequency modulation unit 108, for modulating the digital composite video signal CPSV and the audio signal ADS, which are restored at the MPEG process unit 107, to the high frequency signal and supplies the high frequency signal to a television receiver via an output terminal 110.

In the conventional digital broadcasting receiver having the above-mentioned structure, when the compressively hybridised digital video signal and the audio signal, which are related to the programme from each broadcasting station and the cable broadcasting station, are inputted as a carrier signal via the input terminal 100, the digital broadcasting tuner 101 tunes the inputted and compressed hybrid carrier signal via the input signal 100 to the frequency of the relevant channel and changes the amplitude of the tuned carrier signal in proportion to the size of the phase shift modulation signal.

The diplexer 102 receives the amplitude-changed carrier signal via the digital broadcasting tuner 101. The diplexer 102 eliminates the mutual interference between the video signal and the audio signal, among the tuned carrier signals via the digital broadcasting tuner, and supplies the interference-eliminated signals to the filter unit 103.

In the mean time, the filter unit 103 filters out the inputted carrier signal from the diplexer 102 and detects only a digital signal band, that is the band from 450 MHz to 700 MHz.

The carrier signal having an analog characteristic, detected via the filter unit 103, is converted into the digital signal via the analog/digital converting unit 104 and is supplied to the demodulation unit 105.

The carrier data, restored by the demodulation unit 105, of which error, generated by the interference between the adjacent channels, is corrected by the automatic error correcting unit 106, is supplied to the MPEG process unit 107 as initial audio and video packet data.

Accordingly, the MPEG process unit 107 stores the video data and the audio data, which are inputted from the automatic error correcting unit 106, to the memory unit 108, MPEG processes the initial composite video signal CPSV and the audio signal ADS, respectively outputs the composite video signal CPSV and the audio signal ADS via the video output terminal 111 and the audio output terminal 112 and supplies the composite video signal CPSV and the audio signal ADS to the high frequency modulation unit 108.

The high frequency modulation unit 108 modulates the composite video signal CPSV and the audio signal ADS, which are MPEG processed, and supplies the same to the television receiver via the output terminal 110. Accordingly, the viewer can see the digitally broadcast programme on a colour cathode ray tube.

Furthermore, the composite video signal and the audio signal, which are respectively outputted to the video output terminal 111 and the audio output terminal 112, may be supplied to a digital video disk player or a digital video cassette recorder and stored in a magnetic recording medium.

However, as well-known, when the received broadcasting signal and the received cable broadcasting signal are the digital broadcasting signal, the above-mentioned conventional digital broadcasting receiver receives the broadcasting signal and displays the same on the television receiver. When the received broadcasting signal is an air broadcasting signal or the analog cable broadcasting, the digital broadcasting receiver cannot receive the analog signal directly.

Accordingly, the conventional digital broadcasting receiver cannot receive the analog signal, which is transmitted from the air (analog broadcasting) or the (analog) cable broadcasting. Consequently, it is the problem to receive the digital broadcasting signal via the digital broadcasting receiver.

Accordingly, the digital broadcasting receiver, which can receive the analog/digital broadcasting at the same time, with respect to the air broadcasting or the analog cable broadcasting and having quality more than that of the conventional digital broadcasting receiver, is required.

### SUMMARY OF THE INVENTION

The invention aims to provide a method and apparatus for receiving the analog broadcasting of a digital broadcasting receiver for selectively receiving analog broadcasting and digital broadcasting and displaying the same on a screen by using one digital broadcasting receiver.

The present invention further aims to provide an additional information screen with respect to the same in receiving the digital broadcasting, in case that the analog broadcasting is received.

The present invention further aims to prevent jittering, in case that a user alternately views the digital broadcasting and the analog broadcasting.

The present invention further aims to provide an apparatus which corresponds to a product that requires to output a composite video signal, a luminance/colour and a high frequency modulation.

According to one aspect of the present invention, the digital broadcasting receiver extracts the digital band from the carrier signal, tuned by the digital broadcasting tuner, passes through the extracted digital band via a quadrature phase shift demodulation unit, a forward direction error correcting unit and a reverse multiplexing unit, restores a video data and an audio data by an MPEG audio/video process unit and outputs the same. The apparatus for receiving analog broadcasting of the digital broadcasting receiver includes: a controller, which generates more than two control signals having respectively different information, for receiving analog/digital broadcasting, according to the selection of an analog broadcasting channel or an digital broadcasting channel; an air tuner for receiving the analog broadcasting signal, by the control signal of the controller; a synchronous separation unit for extracting a synchronous signal from the analog broadcasting signal, received by the air tuner; an additional information process unit for generating additional information by the control signal of the controller; a video encoder unit, which encodes one signal by the control signal generated from the controller to the analog video signal by synchronising to the synchronous signal which is obtained by the synchronous separation unit, wherein one signal is a signal between the video signal which is obtained from the MPEG audio/video process unit, and the additional information which is obtained from the additional information process unit; a video mix unit for mixing the video signal from the air tuner and the encoded signal by the control signal of the controller and transmitting the same; a digital/analog converting unit for converting the audio signal, which is obtained from the MPEG audio/video process unit, to the analog signal; and an audio selection unit for selecting the analogized audio signal and the audio signal which is obtained by the air tuner by the control signal of the controller and transmitting the same.

Preferably, the apparatus for receiving the analog broadcasting of the digital broadcasting receiver further includes a luminance/colour separation unit for separating the analog video signal which is mixedly obtained by the video mix unit into a luminance signal and a colour signal and transmitting the same.

Preferably, the video mix unit overlaps the additional information, obtained by the video encoder unit according to the control signal of the controller, with the analog video signal, received by the air tuner, and transmits the same.

Selectively, the apparatus for receiving the analog broadcasting of the digital broadcasting receiver can further include: a luminance/colour separation unit for separating the analog video signal which is received by the air tuner into the luminance signal and the colour signal; and a switching unit for switching the control signal to the continuous signal by detecting the luminance signal and the colour signal, which are separated from the luminance/colour separation unit.

Moreover, selectively, the video mix unit includes a switcher, wherein the switcher maps the additional information except a transparency between the analog video signal, obtained from the video encoder unit, and the analog video signal, received by the air tuner, by the control signal of the controller, and outputs the additional information.

According to another aspect of the present invention, the method for receiving the analog broadcasting of the digital broadcasting receiver comprising the steps of: selecting the digital broadcasting channel and the analog broadcasting channel by equipping with the digital broadcasting tuner and the air tuner; tuning the air tuner, receiving the analog broadcasting of the corresponding channel and extracting the synchronous signal from the received analog broadcasting signal, in case that the selected broadcasting channel is the analog broadcasting channel; tuning the digital broadcasting tuner, receiving the digital broadcasting of the corresponding channel via the digital broadcasting tuner and separating the video signal and the audio signal by MPEG processing, in case that the selected broadcasting channel is the digital broadcasting channel; selectively encoding the MPEG processed video signal and the predetermined additional information, by the selected synchronous signal; selecting and overlapping the video signal and the additional information, which are encoded, and the video signal of the received analog broadcasting, if necessary, and transmitting the same; and selecting the MPEG processed audio signal and the audio signal of the received analog broadcasting, if necessary, and transmitting the same.

Preferably, when the selected channel is the digital broadcasting at the encoding step, the additional information is overlapped with the MPEG processed video data and encoded. In the mean time, when the selected channel is the analog broadcasting, the additional information is encoded.

Preferably, when the selected channel is the digital broadcasting at the transmitting step, the video data and the additional information, which are overlapped, are selected and transmitted. In the mean time, when the selected channel is the analog broadcasting, the additional information is overlapped with the video signal of the analog broadcasting and transmitted.

Preferably, when the selected channel is the analog broadcasting at the transmitting step, the information except the transparency is mapped onto the video signal and transmitted.

In this manner, by receiving the analog broadcasting and the digital broadcasting via one digital broadcasting receiver, the user can see one broadcasting on the screen of the television receiver, selectively, and the additional information in receiving the analog broadcasting, that is the same in receiving the digital broadcasting.

Consequently, by receiving the analog broadcasting and the digital broadcasting via one broadcasting receiver, the present invention provides convenience in using and compatibility with the television receiver.

It is possible for the present invention to have a plurality of preferred embodiments and the most preferred embodiment of the present invention will be described hereinafter.

### BRIEF DESCRIPTION OF THE DRAWINGS

The objects and advantages of the present invention will be made apparent with reference to the following detailed description of certain embodiments, given by way of examples only, with reference to the accompanying drawings, in which:
FIG. 1 is a block diagram of a conventional digital broadcasting receiver; and
FIG. 2 is a block diagram showing an apparatus for receiving an analog broadcasting of a digital broadcasting receiver, according to an embodiment of the present invention.

### DETAILED DESCRIPTION OF THE INVENTION

The present invention can be applicable to various apparatuses for receiving the digital broadcasting, such as a high definition television receiver, a high definition video cassette recorder having a tuner and so on.

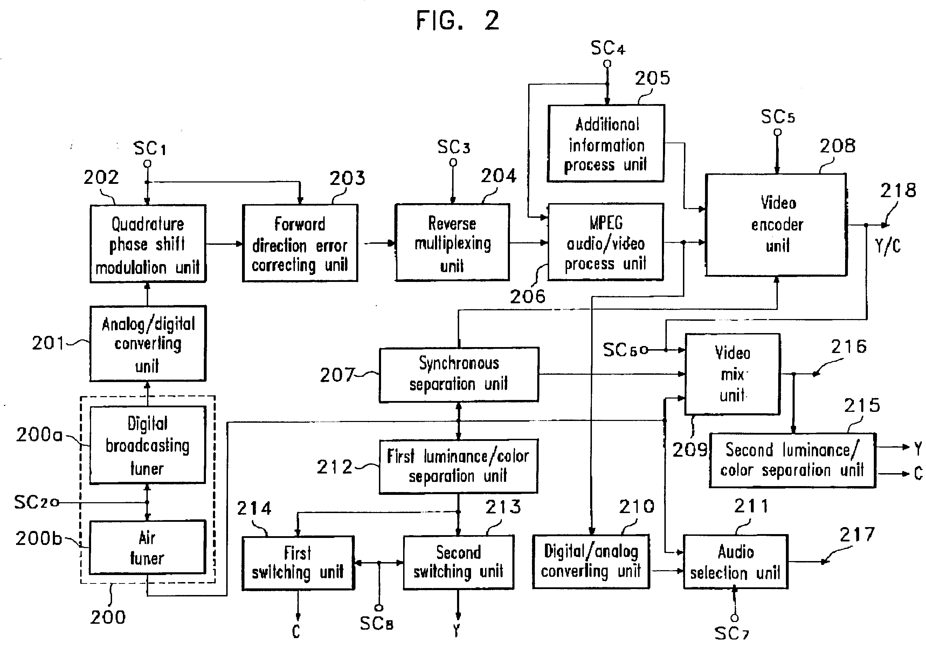

FIG. 2 is a diagram, which pays attention to the apparatus for receiving the analog broadcasting and the digital broadcasting and displaying the same on a screen, not an apparatus for receiving the digital broadcasting only.

Moreover, in the following description, the apparatus for receiving the digital broadcasting in the general receiver for receiving the analog television receiver will be considered.

According to the present invention, FIG. 2 is a block diagram showing an embodiment for explaining the apparatus for receiving the analog broadcasting of the digital broadcasting receiver.

According to the embodiment, the basic apparatus for receiving digital/analog broadcasting includes: a controller which determines whether the analog or the digital broadcasting channel is selected, according to a remote controller (not shown) or a set-mounted channel key, and generates corresponding a first through an eighth control signals (CS1 - CS8); a tuning unit 200 for respectively receiving the digital broadcasting via a digital broadcasting tuner 200a, according to a second control signal CS2, and receiving the analog broadcasting channel via the air tuner 200b, according to the second control signal CS2; an analog/digital converting unit 201 for converting the modulated and received carrier signal into the digital signal, wherein the carrier signal is modulated to a quadrature phase shift keying manner via the digital broadcasting tuner; a quadrature phase shift demodulation unit 202 for restoring the converted and inputted digital broadcasting signal to an initial data by the first control signal CS1 of the controller; a forward direction error correcting unit 203, which corrects a carrier data format based on residue information, wherein the carrier data is demodulated and inputted from the quadrature phase shift demodulation unit 202 according to the first control signal CS1 of which is generated from the controller, in order to correct a bit error, generated from an interference between the adjacent channels and outputs the same by a packet unit; a reverse multiplexing unit 204 for reverse multiplexing the error-corrected and inputted carrier data format to a video data and an audio data, according to the third control signal CS3; an MPEG audio/video process unit 206 for respectively MPEG processing the video data and the audio data, which are reverse multiplexed and inputted, according to a fourth control signal CS4 of the controller, and determined whether to output the video data and audio data, which are respectively MPEG processed, or not; an additional information process unit 205 for determining whether to generate the additional information or not, according to the fourth signal CS4 of the controller; a synchronous separation unit 207 for separating the synchronous signal from the analog broadcasting signal of the corresponding channel, which channel is tuned by the air tuner 200b of the tuning unit 200, and outputs the same; a video encoder unit 208 which encodes the video data, outputted by the MPEG audio/video process unit 206, and the additional information, inputted from the additional information process unit 205, to a fifth control signal CS5 of the controller and the synchronous signal, separated by and inputted from the synchronous separation unit 207 and transmitted the same via an image output terminal 218; a video mix unit 209 which overlaps the additional information, encoded and inputted by a sixth control signal CS6, with the analog video signal, tuned and inputted by the air tuner 200b, and outputs a composite image signal via an image output terminal 216 when the analog broadcasting channel is selected and which selects the video signal and the additional information, with respect to the encoded and inputted by the sixth control signal CS6, and transmits to the television receiver via the image output terminal 216 when the digital broadcasting channel is selected; a digital/analog converting unit 210 for converting the audio signal, inputted from the MPEG audio/video process unit 206, to the analog signal and outputting the same; an audio selection unit 211 for selecting the converted analog audio signal and the audio signal, tuned and inputted by the air tuner 200b, according to a seventh control signal CS7, and transmitting the same to the television receiver.

Moreover, if for outputting a luminance/colour (Y/C) in addition to outputting the composite image signal is necessary, the basic digital/analog broadcasting receiver further includes: a second luminance/colour separation unit 215 for separating the composite image signal, with respect to the digital broadcasting and the analog broadcasting signal, inputted from the video mix unit 209, into a luminance Y signal and a colour C signal, and transmitting the same; a first luminance/colour separation unit 212 for separating the analog composite image signal which is tuned and inputted by the air tuner 200b into the luminance Y signal and the colour C signal; and a first and a second switching unit 213 and 214 for changing the separated and inputted luminance Y signal and the colour C signal to a continuous signal, according to an eighth control signal CS8, and transmitting the same.

The apparatus for receiving the analog broadcasting of the digital broadcasting receiver, having an above-mentioned manner, selectively receives the analog broadcasting and the digital broadcasting via an air antenna and a parabolic antenna, according to using the late-mentioned operation.

First, when the user turns on the digital broadcasting receiver and the television receiver, the controller of the digital broadcasting receiver generates the fourth control signal CS4, controls the additional information process unit 205 and generates the graphic data with respect to the additional information.

The graphic data, generated from the additional information process unit 205, is transmitted to the luminance/colour(Y/C) signal via the video encoder unit 208 and the image output terminal 218 and simultaneously, transmitted to the television receiver via the video mix unit 209 and the image output terminal 216, which will be described later, and displayed on the screen.

Thus, when the user selects the digital broadcasting channel in the graphic data of the screen, by using the remote controller or a key on the television set, for receiving the digital broadcasting, the controller generates the first through the seventh control signals CS1 through CS7.

The second control signal CS2, generated from the controller, controls the digital broadcasting tuner of the tuning unit 200 and receives the digital broadcasting signal of the corresponding channel via the parabolic antenna.

The carrier signal, which is the quadrature phase shift keying manner modulated and received via the digital broadcasting tuner 200a is digitalized via the analog/digital converting unit 201 and inputted to the quadrature phase shift demodulation unit 202.

The quadrature phase shift demodulation unit 202 demodulates the converted and inputted digital broadcasting signal to the initial data by the first control signal CS1, generated from the controller.

The carrier data, restored by the quadrature phase shift demodulation unit 202, is inputted into the reverse multiplexing unit 204 when the forward direction error correcting unit 203 corrects the error which is generated by the interference between the adjacent channels according to the first control signal CS1 of the controller.

The reverse multiplexing unit 204 reverse multiplexes the multiplexed and inputted carrier data to the video data and the audio data by the third control signal CS3, generated by the controller, and supplies the same to the MPEG audio/video process unit 206.

The MPEG audio/video process unit 206 respectively MPEG processes the video data and the audio data, which are reverse multiplexed and inputted, by the fourth control signal CS4 of the controller and respectively supplies the MPEG audio data to the digital/analog converting unit 210 and the MPEG video data to the video encoder unit 208.

Then, the additional information process unit 205 supplies the additional information to the video encoder unit 208 by the fourth control signal CS4 of the controller.

Accordingly, the video encoder unit 208 analogizes the MPEG video data and the additional information, which are inputted from the MPEG audio/video process unit 206, by the fifth control signal CS5, transmits the same via the image output terminal 218 and simultaneously, supplies the same to the video mix unit 209.

The video mix unit 209 mixes the analogized composite image signal and the additional information, which are encoded and inputted by the sixth control signal CS6 of the controller, and supplies the same to the television receiver via the image output terminal 216. Moreover, the digital/analog converting unit 210 analogizes the MPEG audio data, which is inputted by the MPEG audio/video process unit 206, and supplies the same to the audio selection unit 211.

Furthermore, the audio selection unit 211 selects the audio signal with respect to the analogized and inputted digital broadcasting by the seventh control signal CS7 of the controller and supplies the same to the television receiver via the audio output terminal 217. Accordingly, the user can view the digital broadcasting which displays the additional information via the colour cathode ray tube.

In the mean time, in the above-mentioned manner, in receiving the analog broadcasting via the apparatus for receiving the digital broadcasting, when the analog broadcasting channel number in the image graphic data of the television receiver is selected by using the remote controller or the key on the television receiver set, the second or the fourth through the seventh controls CS2, CS4, CS5, CS6 and CS7, which are having different information value with respect to the receiving the digital broadcasting, are generated.

Then, the second control signal CS2, generated from the controller, controls the air tuner 200b of the tuning unit 200 and selects the corresponding channel.

The analog broadcasting signal of the selected channel, that is the outputted composite image signal from the air tuner 200b, is separated into the synchronous signal by the synchronous separation unit 207 and inputted into the video encoder unit 208, and also separated into the video signal and the audio signal. The separated video signal is inputted into the video mix unit 209 and the separated audio signal is inputted into the audio selection unit 211, respectively.

In changing from the digital broadcasting to the analog broadcasting, by adjusting the phase between the synchronous signal, separated from the synchronous separation unit 207 and the synchronous signal according to the MPEG screen, that is the synchronous signal according to the video data screen of the channel in receiving the digital broadcasting, the jittering of the screen during changing the broadcasting is prevented.

In other words, the synchronous signal from the composite image signal in the synchronous separation unit 207 is separated and the phase is adjusted to the digital broadcasting.

In changing from the digital broadcasting to the digital broadcasting, the MPEG audio data and the MPEG video data, which are before processing by the MPEG audio/video process unit 206, are intercepted by the fourth control signal CS 4 of the controller and only the additional information from the additional information process unit 205 is continuously supplied to the video encoder unit 208.

Accordingly, according to the fifth control signal CS5, the video encoder unit 208 analogizes the graphic data with respect to the additional information to the luminance Y signal and the colour C signal, transmits the same via the image output terminal 218 and simultaneously, supplies the same to the video mix unit 209.

Then, the video mix unit 209 overlaps the luminance/colour(Y/C) signal, with respect to the encoded and inputted additional information form the video encoder unit 208, with the analog video signal which is tuned by the air tuner 200b, by the sixth control signal CS6 of the controller, and outputs the composite image signal to the television receiver via the image output terminal 216.

Selectively, it is possible to map the information except the transparency and so on, by using the video switching unit instead of using the video mix unit 209, onto the analog video signal and to supply the same to the television receiver.

Consequently, according to the seventh control signal CS7 of the controller, the audio selection unit 211 selects the analog video signal which is tuned by the air tuner, and transmits the same to the television receiver via the audio output terminal 217. Accordingly the MPEG screen, which is in receiving the digital broadcasting, is changed to the analog broadcasting screen. But, the additional information such as on screen display information is maintained without changing.

In changing from receiving the analog broadcasting to receiving the digital broadcasting again, as above-mentioned manners, the analog broadcasting screen is changed to the MPEG screen of the digital broadcasting after synchronising both phases.

The first and the second luminance/colour separation units 212 and 215 and the first and the second switching units 213 and 214 are additionally required, as shown in FIG. 2, selectively, to output the luminance Y signal and the colour C signal in addition to the composite image signal,. The eighth control signal CS8 from the controller is also required.

In other words, the second luminance/colour separation unit 215 separates the luminance Y signal and the colour C signal from the composite image signal with respect to the digital broadcasting or the analog broadcasting, which is mixed with the additional information and inputted by the video mix unit 209, and supplies the same to the television receiver.

The first luminance/colour separation unit 212 separates the composite image signal with respect to the pure analog signal, which is inputted from the air tuner 200b, into the luminance signal and the colour signal, and supplies the same to the first and the second switching units 213 and 214.

The first and the second switching units 213 and 214 change the luminance signal and the colour signal, which are separated and inputted by the first luminance/colour separation unit 212, to the continuous signal by the eighth control signal CS8 of the controller and supplies the same to the video cassette recorder or the television receiver.

The invention provides the following advantages, among others. The user can view the programme on the screen by MPEG processing the video signal and the audio signal of the digital broadcasting via the MPEG process unit of the digital broadcasting receiver, when the present invention uses the air (RF) broadcasting tuner, video mix unit and the video switching unit for receiving the analog broadcasting, the present invention can receive the analog broadcasting of which is transmitted by the air broadcasting or the cable broadcasting, and in addition to the digital broadcasting.

Consequently, according to the present invention, by receiving the analog broadcasting and the digital broadcasting using one broadcasting receiver, the present invention can receive the analog broadcasting and the digital broadcasting by the selection of the video mix unit or the video selection unit. By displaying the same additional information with respect to receiving the digital broadcasting during receiving the analog broadcasting, the present invention provides convenience in using and compatibility with the television receiver.

It should be clearly understood through the detailed descriptions that the apparatus for receiving the analog broadcasting of the digital broadcasting receiver can receive the air broadcasting or the analog cable broadcasting by using one digital broadcasting receiver. Also, the apparatus for receiving the analog broadcasting of the digital broadcasting receiver can provide the convenience in using and the compatibility with the television receiver by adapting the basic analog tuning function without increasing the cost.

As the terms mentioned in the specification are determined based upon the function of the present invention, and they can be changed according to the technician's intention or a usual practice, the terms should be determined considering the overall contents of the specification of the present invention.

While there have been illustrated and described certain embodiments of the present invention, it will be understood by those skilled in the art that various changes and modifications may be made, and equivalents may be substituted for elements thereof without departing from the true scope of the present invention. In addition, many modifications may be made to adapt the teaching of the present invention to a particular situation, without departing from the scope thereof. Therefore, it is intended that the present invention not be limited to the particular embodiments disclosed, but that the present invention includes all embodiments falling within the scope of the appended claims.

## Claims

1. A method for receiving analog broadcasting of a digital broadcasting receiver, comprising the steps of:
- selecting a digital broadcasting channel and an analog broadcasting channel by equipping with a digital broadcasting tuner and an air broadcast tuner;
- receiving said digital broadcasting via said digital broadcasting tuner and separating a video signal and an audio signal by MPEG processing when said selected broadcasting channel is the digital broadcasting channel;
- receiving said analog broadcasting by tuning said air tuner, extracting a synchronous signal from said received analog broadcasting signal and adjusting the extracted synchronous signal to a synchronous signal of digital broadcasting when said selected broadcasting channel is the analog broadcasting channel;
- encoding said MPEG processed video signal and predetermined additional information selectively, according to said extracted synchronous signal;
- selecting, overlapping and transmitting said encoded video signal, the additional information and the video signal of said received analog broadcasting, if necessary; and
- selecting said MPEG processed audio signal and the audio signal of said received analog broadcasting and transmitting the selected signal.

2. The method for receiving the analog broadcasting of the digital broadcasting receiver of claim 1, wherein, in said encoding step, said MPEG processed video data are overlapped with said additional information and are analogized when said selected channel is the digital broadcasting and only said additional information is analogized when said selected channel is the analog broadcasting.

3. The method for receiving the analog broadcasting of the digital broadcasting receiver of claim 1, wherein, in said transmitting step, said overlapped video signal and said additional information are selected and transmitted when said selected channel is digital broadcasting and the video signal of said analog broadcasting with which said additional information is overlapped and transmitted when said selected channel is the analog broadcasting.

4. The method for receiving the analog broadcasting of the digital broadcasting receiver of claim 1, wherein, in said transmitting step, the information except for a transparency from said additional information is mapped with said analog video signal and is transmitted when said selected channel is the analog broadcasting.

5. A digital broadcasting receiver which MPEG processes and transmits a video signal and an audio signal from a received carrier signal via a digital broadcasting tuner to a television receiver, comprising:
- a controller which determines whether an analog broadcasting channel or a digital broadcasting channel is selected and generates more than two control signals having respectively different information, for receiving analog/digital broadcasting, according to said selection;
- a digital broadcasting tuner and an air broadcast tuner for respectively receiving the digital broadcasting and the analog broadcasting, by said controller;
- a synchronous separation unit for extracting a synchronous signal from said analog broadcasting signal received by said air broadcast tuner;
- an additional information process unit for generating additional information by said controller;
- a video encoder unit for encoding said video signal and said additional information, which are MPEG processed, into the analog video signal according to the control signal which is generated from said controller and the synchronous signal of a synchronous signal separating means;
- a video mix unit for mixing the video signal which is received from said air tuner and the said encoded video signal, according to the control signal of said controller, and transmitting the mixed signal;
- a digital/analog converting unit for analogizing said MPEG processed audio signal; and
- an audio selection unit for selecting and transmitting said converted audio signal and the audio signal of said air tuner, according to the control signal of said controller.

6. The apparatus for receiving analog broadcasting of the digital broadcasting receiver according to claim 5, further comprising a luminance/colour separation unit for separating the analog signal which is obtained by mixing in said video mix unit into a luminance signal and a colour signal and transmitting the separated analog signal.

7. The apparatus for receiving analog broadcasting of the digital broadcasting receiver of claim 5, wherein said video mix unit overlaps the additional information which is obtained by said video encoder unit onto the analog video signal which is received by said air tuner and transmits the overlapped analog video signal.

8. The apparatus for receiving analog broadcasting of the digital broadcasting receiver of claim 5, further comprising:
- a luminance/colour separation unit for separating the analog broadcasting signal which is received by said air tuner into a luminance signal and a colour signal; and
- a switching unit for detecting said separated luminance signal and said colour signal, changing the same to a continuous signal according to the control signal of said controller and transmitting the continuous signal.

9. The apparatus for receiving analog broadcasting of the digital broadcasting receiver of claim 5 or claim 7, wherein said video mix unit includes a switcher which maps the additional information except the transparency between the analog signal which is obtained by said video encoder unit and the analog video signal which is received from said air tuner, according to the control signal of said controller, and outputs the mapped additional information.

10. A method for receiving analog broadcasting of a digital broadcasting receiver, apparatus for receiving analog broadcasting or a digital broadcasting receiver substantially as herein described, and/or as shown in the accompanying drawings.
